# EUROPEAN PATENT APPLICATION

(11) **EP 4 697 067 A1**
(43) Date of publication of application: **18.02.2026**
(21) Application number: 24194767.0
(22) Date of filing: 15.08.2024
(51) Int. Cl.: G01S 13/60, G01S 13/931, G01S 13/86

(54) **VEHICLE MOTION ESTIMATION**

(71) Applicant: Volvo Truck Corporation, 405 08 Göteborg (SE)
(72) Inventor: PANAHANDEH, Ghazaleh, 414 67 GÖTEBORG (SE); KUMRU, Murat, 413 06 GÖTEBORG (SE)
(74) Representative: Ström & Gulliksson AB

(57) **Abstract**

A computer-implemented method for motion estimation of a vehicle is disclosed. The method comprises performing (by processing circuitry of a computer system) a first preliminary motion estimation based on radar sensor data, performing (by the processing circuitry) a second preliminary motion estimation based on inertial measurement unit (IMU) sensor data, and determining (by the processing circuitry) a motion estimation for the vehicle as a weighted average of the first and second preliminary motion estimations.

The weighted average is determined by application of a dynamically varying weighting. For example, the weighting may vary dynamically based on one or more of: a speed of the vehicle, an ambient temperature of the vehicle, an ambient humidity of the vehicle, and an activity level of windscreen wipers of the vehicle.

Corresponding computer system, vehicle, computer program product, and non-transitory computer-readable storage medium are also disclosed.

## Description

### TECHNICAL FIELD

The disclosure relates generally to vehicle motion management. In particular aspects, the disclosure relates to vehicle motion estimation. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Generally, vehicle control, such as vehicle motion management, may be improved if details regarding the motion of the vehicle are known, or at least measured or estimated with some suitable accuracy.

A problem with existing approaches for vehicle control is that the motion of the vehicle is not known with sufficient granularity and/or accuracy and/or reliability. Thereby, it becomes cumbersome to plan vehicle control actions adequately. For example, safety issues and/or under-utilization of available control capacity may occur if the vehicle control uses existing approaches for motion estimation.

Therefore, there is a need for alternative approaches for vehicle motion estimation.

### SUMMARY

According to a first aspect of the disclosure, a computer system is provided for motion estimation of a vehicle. The computer system comprises processing circuitry configured to perform a first preliminary motion estimation based on radar sensor data, perform a second preliminary motion estimation based on inertial measurement unit (IMU) sensor data, and determine a motion estimation for the vehicle as a weighted average of the first and second preliminary motion estimations. The weighted average is determined by application of a dynamically varying weighting. The first aspect of the disclosure may seek to improve vehicle motion estimation. A technical benefit may include that more adequate vehicle control is enabled. For example, depending on the current situation, sensor data for radar or IMU may be relied on to different extents for the vehicle motion estimation.

Optionally in some examples, including in at least one preferred example, the weighting may vary dynamically based on one or more variable vehicle parameters and/or based on one or more variable environmental parameters of the vehicle. A technical benefit may include that the vehicle motion estimation can be adapted to changing conditions.

Optionally in some examples, including in at least one preferred example, the weighting may vary dynamically based on a speed of the vehicle. A technical benefit may include that sensor data for radar or IMU may be relied on to different extents depending on the speed.

Optionally in some examples, including in at least one preferred example, a weight corresponding to a first speed value may entail higher influence for the first preliminary motion estimation than a weight corresponding to a second speed value which is lower than the first speed value. A technical benefit may include that radar sensor data can dominate the vehicle motion estimation at relatively high speed (where IMU sensor data is less reliable and/or less accurate). A technical benefit may include that IMU sensor data can dominate the vehicle motion estimation at relatively low speed (where IMU sensor data is relatively reliable and/or relatively accurate).

Optionally in some examples, including in at least one preferred example, the weighting may vary dynamically based on an ambient temperature of the vehicle. A technical benefit may include that sensor data for radar or IMU may be relied on to different extents depending on the ambient temperature.

Optionally in some examples, including in at least one preferred example, a weight corresponding to a first temperature value may entail higher influence for the first preliminary motion estimation than a weight corresponding to a second temperature value which is lower than the first temperature value. A technical benefit may include that radar sensor data can dominate the vehicle motion estimation at relatively high temperature (where radar sensor data is relatively reliable and/or relatively accurate). A technical benefit may include that IMU sensor data can dominate the vehicle motion estimation at relatively low temperature (where radar sensor data is less reliable and/or less accurate).

Optionally in some examples, including in at least one preferred example, the weighting may vary dynamically based on an ambient humidity of the vehicle. A technical benefit may include that sensor data for radar or IMU may be relied on to different extents depending on the ambient humidity.

Optionally in some examples, including in at least one preferred example, a weight corresponding to a first humidity value may entail higher influence for the first preliminary motion estimation than a weight corresponding to a second humidity value which is higher than the first humidity value. A technical benefit may include that radar sensor data can dominate the vehicle motion estimation at relatively low humidity (where radar sensor data is relatively reliable and/or relatively accurate). A technical benefit may include that IMU sensor data can dominate the vehicle motion estimation at relatively high humidity (where radar sensor data is less reliable and/or less accurate).

Optionally in some examples, including in at least one preferred example, the weighting may vary dynamically based on an activity level of windscreen wipers of the vehicle. A technical benefit may include that sensor data for radar or IMU may be relied on to different extents depending on an indirect measure of the ambient humidity, which does not necessitate a specific humidity sensor.

Optionally in some examples, including in at least one preferred example, a weight corresponding to a first activity level entails higher influence for the first preliminary motion estimation than a weight corresponding to a second activity level which is higher than the first activity level. A technical benefit may include that radar sensor data can dominate the vehicle motion estimation at relatively low (or no) wiper activity (corresponding to relatively low humidity; where radar sensor data is relatively reliable and/or relatively accurate). A technical benefit may include that IMU sensor data can dominate the vehicle motion estimation at relatively high wiper activity (corresponding to relatively high humidity; where radar sensor data is less reliable and/or less accurate).

According to a second aspect of the disclosure, a vehicle is provided, which comprises the computer system of the first aspect. The second aspect of the disclosure may seek to provide a vehicle with improved motion estimation. A technical benefit may include that the vehicle can be more adequately controlled.

Optionally in some examples, including in at least one preferred example, the vehicle may further comprise one or more radar sensor(s) configured to provide the radar sensor data to the computer system, and one or more IMU sensor(s) configured to provide the IMU sensor data to the computer system.

According to a third aspect of the disclosure, a computer-implemented method is provided for motion estimation of a vehicle. The method comprises performing (by processing circuitry of a computer system) a first preliminary motion estimation based on radar sensor data, performing (by the processing circuitry) a second preliminary motion estimation based on inertial measurement unit, IMU, sensor data, and determining (by the processing circuitry) a motion estimation for the vehicle as a weighted average of the first and second preliminary motion estimations. The weighted average is determined by application of a dynamically varying weighting. The third aspect of the disclosure may seek to improve vehicle motion estimation. A technical benefit may include that more adequate vehicle control is enabled. For example, depending on the current situation, sensor data for radar or IMU may be relied on to different extents for the vehicle motion estimation.

According to a fourth aspect of the disclosure, a computer program product is provided, which comprises program code for performing, when executed by the processing circuitry, the method of the third aspect. The fourth aspect of the disclosure may seek to convey program code for improving vehicle motion estimation. A technical benefit may include that new vehicles and/or legacy vehicles may be conveniently configured, by software installation/update, to use dynamically varying weighting to combine radar senor data and IMU sensor data.

According to a fifth aspect of the disclosure, a non-transitory computer-readable storage medium is provided comprising instructions, which when executed by the processing circuitry cause the processing circuitry to perform the method of the third aspect. The fifth aspect of the disclosure may seek to convey program code for improving vehicle motion estimation. A technical benefit may include that new vehicles and/or legacy vehicles may be conveniently configured, by software installation/update, to use dynamically varying weighting to combine radar senor data and IMU sensor data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2** is a schematic drawing illustrating a vehicle according to some examples.
**FIG. 3** is a collection of schematic drawings illustrating sensor placements for a vehicle according to some examples.
**FIG. 4** is a collection of schematic drawings illustrating motion estimation principles according to some examples.
**FIG. 5** is a schematic diagram illustrating a computer system for implementing examples disclosed herein, according to some examples.
**FIG. 6** is a schematic drawing illustrating a computer program product, in the form of a non-transitory computer-readable storage medium, according to some examples.
**FIG. 7** is a schematic block diagram of a control unit according to some examples.

### DETAILED DESCRIPTION

The detailed description set forth below provides information and examples of the disclosed technology with sufficient detail to enable those skilled in the art to practice the disclosure.

As already mentioned, vehicle control may be improved if details regarding the motion of the vehicle (a.k.a., ego motion) are known, or at least measured or estimated with some suitable accuracy. Examples of useful parameters regarding the motion of the vehicle include velocity (e.g., longitudinal, lateral, vertical), acceleration (e.g., longitudinal, lateral, vertical), angle (e.g., pitch, roll, yaw), moment (e.g., pitch, roll, yaw), etc. Parameters regarding the motion of the vehicle may be defined for the entire vehicle, and/or for one or more units of the vehicle (e.g., tractor, trailer(s), etc.), and or for different parts of a vehicle unit (e.g., front of trailer, rear of trailer, etc.).

Generally, the motion of the vehicle may be specified in relation to any suitable reference (e.g., ground surface, earth center of gravity, vehicle reference, vehicle unit, etc.). For example, the motion of the vehicle may be specified in a coordinate systems defined based on the reference (e.g., a coordinate system defined based on the ground surface, a geo-based coordinate system, a vehicle-centric coordinate system, a coordinate system for a specific vehicle unit, etc.).

To further exemplify, detecting and accurately estimating the motion of a vehicle may be important - and sometimes crucial - for various applications (e.g., vehicle safety, collision avoidance, anti-lock braking systems, navigation guidance, advanced driver assistance systems, autonomous navigation, adaptive cruise control, operational efficiency, fuel optimization, etc.).

Inertial measurement unit (IMU) sensors may be useful for providing measurements of accelerations and angular rates. However, they typically suffer from drifting and/or accumulation of errors over time.

Radar sensor(s), such as ground-facing Doppler radar sensor(s), may be useful to provide real-time measurements of speed relative to the ground surface and associated with one or more direction(s) from the vehicle. Doppler radar is particularly advantageous in some adverse weather conditions where other sensors (e.g., cameras) may face challenges, but may be itself have problems with accuracy in some conditions (e.g., water splashing, high humidity, heavy rain, snow, fog, low temperature, etc.) and/or if there is some obstacle between the radar and the ground surface. Furthermore, Doppler radar typically encounters some challenges in providing accurate estimations at low - or zero - speed (due to the limited Doppler shift), as well as more generally (due to, e.g., reduced sensitivity, ambiguity in direction, interference, etc.).

A combination of sensor data from radar (e.g., Doppler radar) and IMU may - at least to some extent - mitigate any drawback that one or both of the sensor types experience.

For example, Doppler radar may act as a reliable source for correcting long-term drift in the IMU data. The radar measurements can provide an external reference to aid the correction of systematic errors in the IMU data, especially during prolonged operation where IMU errors otherwise tend to accumulate. This sensor fusion approach enables a more robust and dependable solution for accurately capturing dynamic vehicle motion in various driving conditions. Alternatively or additionally, the IMU data may be used for compensation of inferior radar data.

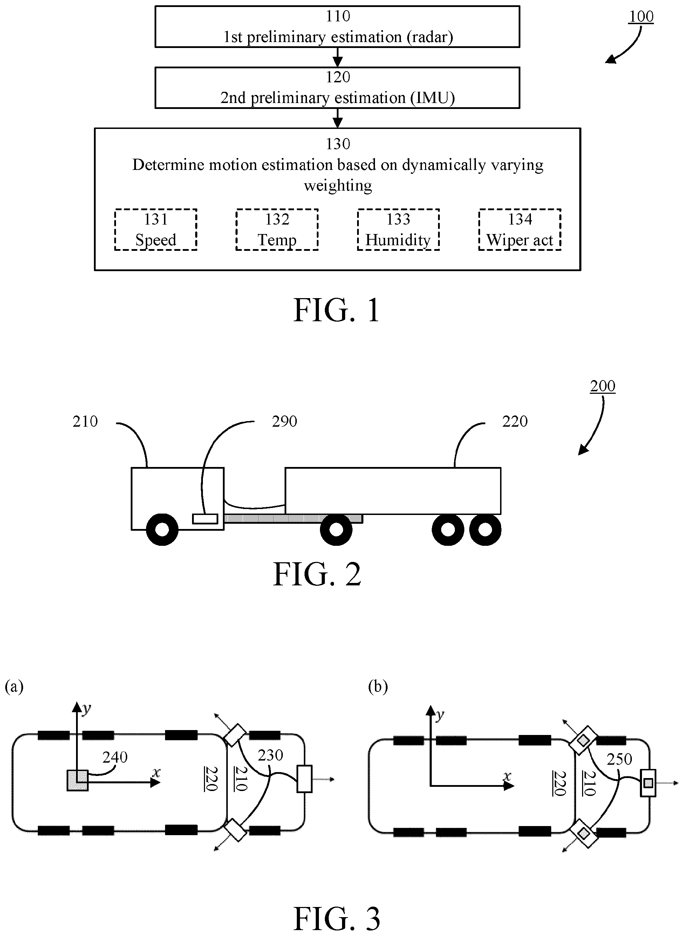

**FIG. 1** illustrates a method **100** according to some examples. The method **100** is a computer-implemented method for motion estimation of a vehicle. For example, the method 100 may be performed by processing circuitry of a computer system.

As illustrated by **110,** the method **100** comprises performing a first preliminary motion estimation based on radar sensor data. The radar sensor data may be any suitable radar sensor data. For example, the radar sensor data may be received from one or more radar sensors mounted on (or comprised in) the vehicle. The first preliminary motion estimation may be performed in any suitable way based on radar sensor data (e.g., according to approaches of the prior art).

According to some examples, a radar sensor system estimates one or more parameter(s) specifying a relation between the radar sensor(s) and one or more other object(s) (e.g., ground) by emitting electromagnetic waves and analyzing time delay and/or frequency shift of a received signal caused by reflection of the electromagnetic waves as the object(s). Examples of estimated parameter(s) include distance, relative speed, angle, etc.

Motion estimation using radar sensor data (e.g., in advanced driver-assisted systems, ADAS, and autonomous systems) can be achieved through various methods. These include range-Doppler processing to assess distance and relative speed, time-of-flight measurement to determine object distance and trajectory, and Kalman filtering for smoothing and predicting motion. Other approaches involve assuming a constant velocity model for future position estimation and clustering radar reflections to track object motion. Such motion estimation may provide an initial motion estimate, which can be further refined with additional data and/or application of more advanced algorithms.

As illustrated by **120,** the method **100** comprises performing a second preliminary motion estimation based on inertial measurement unit (IMU) sensor data. The IMU sensor data may be any suitable IMU sensor data. For example, the IMU sensor data may be received from one or more IMU sensors mounted on (or comprised in) the vehicle. The second preliminary motion estimation may be performed in any suitable way based on IMU sensor data (e.g., according to approaches of the prior art).

Motion estimation using one or more Inertial Measurement Unit (IMU) typically involves tracking the movement of a vehicle by integrating data from IMU accelerometers and/or gyroscopes, which measure linear acceleration and angular velocity, respectively. By continuously updating position and orientation based on these measurements, the IMU can provide a real-time estimate of the vehicle motion. IMU sensor data tends to drift over time (e.g., due to sensor noise and/or integration errors), which can make it less reliable for long-term motion estimation. Therefore, sensor data fusion based on other data sources (e.g., GPS, radar, etc.) may be beneficial (or even necessary) to correct and stabilize the motion estimates over longer time periods.

As illustrated by **130,** the method **100** comprises determining a motion estimation for the vehicle as a weighted average of the first and second preliminary motion estimations, wherein the weighted average is determined by application of a dynamically varying weighting.

The resulting motion estimate(s) may be used in ay suitable way. For example, the motion estimate(s) may be provided to a vehicle control function (e.g., a vehicle motion management - VMM - function), which may be configured to control the vehicle based on the motion estimate(s).

Generally, the dynamically varying weighting can be determined/adjusted/updated in any suitable way. Typically, the weighting may vary dynamically based on one or more variable vehicle parameters and/or based on one or more variable environmental parameters of the vehicle.

For example, machine learning approaches (e.g., using adaptive filtering) may be used to determine the weights based on current conditions. In some examples, the machine learning system may be initially trained on data collected in controlled situations, where parameter(s) defining the motion of the vehicle and/or current conditions (e.g., temperature, humidity, etc.) are known. In some examples, the weights of an adaptive filter may be learnt from field test data, where a diverse dataset is collected, a corresponding reference system is defined for benchmarking, and relevant features are extracted. Some suitable performance metrics may be established, and initial weights may be set. The adaptive filter can then be trained iteratively using the field test data, adjusting weights based on the difference between the predictions of the adaptive filter and the reference system. The dataset could preferably include corner cases to ensure robustness of the adaptive filter. Validation based on a separate dataset may be performed for fine-tuning and/or assessment of generalization. Once trained, the adaptive filter can be deployed for real-world applications, with ongoing monitoring and updating for evolving conditions.

Alternatively or additionally, the weighting may vary dynamically based on a speed (e.g., a longitudinal velocity) of the vehicle, as illustrated by **131.** For example, a weight corresponding to a first speed value may entail higher influence (e.g., a higher weight value) for the first preliminary motion estimation than a weight corresponding to a second speed value which is lower than the first speed value and/or a weight corresponding to a first speed value may entail higher influence (e.g., a higher weight value) for the second preliminary motion estimation than a weight corresponding to a second speed value which is higher than the first speed value. Put differently, the radar sensor data may dominate the motion estimation at relatively high speed and/or the IMU sensor data may dominate the motion estimation at relatively low speed. This is beneficial because the IMU sensor data is typically less reliable and/or less accurate under such conditions.

Yet alternatively or additionally, the weighting may vary dynamically based on an ambient temperature of the vehicle, as illustrated by **132.** For example, a weight corresponding to a first temperature value may entail higher influence (e.g., a higher weight value) for the first preliminary motion estimation than a weight corresponding to a second temperature value which is lower than the first temperature value and/or a weight corresponding to a first temperature value may entail higher influence (e.g., a higher weight value) for the second preliminary motion estimation than a weight corresponding to a second temperature value which is higher than the first temperature value. Put differently, the radar sensor data may dominate the motion estimation at relatively high temperature and/or the IMU sensor data may dominate the motion estimation at relatively low temperature. This is beneficial because the radar sensor data is typically less reliable and/or less accurate under such conditions.

Yet alternatively or additionally, the weighting may vary dynamically based on an ambient humidity of the vehicle, as illustrated by **133.** For example, a weight corresponding to a first humidity value may entail higher influence (e.g., a higher weight value) for the first preliminary motion estimation than a weight corresponding to a second humidity value which is higher than the first humidity value and/or a weight corresponding to a first humidity value may entail higher influence (e.g., a higher weight value) for the second preliminary motion estimation than a weight corresponding to a second humidity value which is lower than the first humidity value. Put differently, the radar sensor data may dominate the motion estimation at relatively low humidity and/or the IMU sensor data may dominate the motion estimation at relatively high humidity (e.g., rain, fog, etc.). This is beneficial because the radar sensor data is typically less reliable and/or less accurate under such conditions.

Yet alternatively or additionally, the weighting may vary dynamically based on an activity level of windscreen wipers of the vehicle, as illustrated by **134.** For example, a weight corresponding to a first activity level may entail higher influence (e.g., a higher weight value) for the first preliminary motion estimation than a weight corresponding to a second activity level which is higher than the first activity level and/or a weight corresponding to a first activity level may entail higher influence (e.g., a higher weight value) for the second preliminary motion estimation than a weight corresponding to a second activity level which is lower than the first activity level. Put differently, the radar sensor data may dominate the motion estimation at relatively low (or no) wiper activity and/or the IMU sensor data may dominate the motion estimation at relatively high wiper activity (indicating conditions such as, e.g., rain, fog, etc.). This is beneficial because an indication of the ambient humidity can be obtained without specific humidity sensor(s). In situations with humidity sensor(s), the accuracy of the humidity indication may be achieved by using both humidity sensor data and wiper activity data.

**FIG. 2** schematically illustrates a side-view of an example vehicle **200** for cargo transport where the techniques disclosed herein can be advantageously applied. The vehicle **200** comprises a truck/tractor/towing unit **210** configured to tow one or more trailer unit(s) **220** in a known manner.

The tractor unit **210** and/or any of the trailer unit(s) **220** may comprise one or more sensor(s) configured to provide radar sensor data and IMU sensor data as described and exemplified herein (e.g., to be used in **110** and **120** of **FIG. 1**).

Furthermore, the tractor unit **210** and/or any of the trailer unit(s) **220** may comprise a vehicle control unit (VCU) **290** configured to perform various vehicle control functions. For example, the VCU **290** may comprise processing circuitry configured to perform the method **100** of **FIG. 1** and/or vehicle motion management (VMM).

Actuation control of a wheel will now be used to exemplify one possible utilization of the motion estimate(s). The control of the wheel is performed via some example motion support devices (MSDs) (e.g., a propulsion device - such as an electric machine, a power steering arrangement, one or more brake(s), etc.). The MSDs are actuators which can be controlled by one or more MSD control units.

A vehicle motion management (VMM) function may be employed to perform force allocation to meet received motion requests in a safe and robust manner. The VMM function communicates actuator instructions to the different MSDs via the MDS control unit(s). The VMM function manages both force generation and MSD coordination; i.e., it determines what forces that are required for different wheels and vehicle units in order to fulfil the motion requests, for instance to accelerate the vehicle according to a requested acceleration profile and/or to generate a requested curvature motion by the vehicle. For example, the VMM function may be comprised in the VCU **290** of **FIG. 2****.**

To determine the actuator instructions based on the motion requests, the VMM function typically uses information regarding the current state of the vehicle (including, e.g., the motion estimate(s) resulting from execution of the method **100** of **FIG. 1**). The information regarding the current state of the vehicle may be provided from a computer system, and may be based on measurement data from one or more sensor(s). For example, the computer system may comprise processing circuitry configured to perform the method **100** of **FIG. 1****.** Alternatively or additionally, the computer system may be comprised in the VCU **290** of **FIG. 2****.**

In some examples, the VMM function comprises motion estimation, global force generation, and motion coordination. The motion estimation is configured to provide a representation of the current motion of the vehicle to the global force generation. For example, the current motion may be represented by parameters such as vertical force *F_{z}*, friction between road and tire *µ*, vehicle velocity in relation to a vehicle-centered coordinate system *vₓ,* road gradient (or road slope) *α*, road banking *β*, etc. Particularly, the current motion may comprise the motion estimate(s) resulting from execution of the method **100** of **FIG. 1****.** The global force generation is configured to determine global forces elements *v* based on the representation of the current motion and based on motion requests (e.g., an acceleration request, a steering angle, etc.), and to provide the determined global forces elements to the motion coordination. For example, the motion requests may originate from driver controls of the vehicle (e.g., steering wheel, accelerator pedal, brake pedal, etc.). Alternatively or additionally, the motion requests may originate from an autonomous - or semi-autonomous - driving control function of the vehicle (e.g., requesting longitudinal speed, longitudinal acceleration, steering angle, etc.). The motion coordination is configured to determine actuator request elements u based on the global forces elements *v*. The motion coordination is also configured to provide the actuator request elements *u*, for operation of the motion support devices.

**FIG. 3** schematically illustrates a collection of top-views - (a) and (b) - of the example vehicle **200** of **FIG. 2****,** each with a respective sensor placement according to some examples.

In example (a), the vehicle comprises a single IMU sensor **240** located in the trailer unit **220,** and three radar sensors **230** located in the tractor unit **210.**

In example (b), the vehicle comprises three sensors **250** located in the tractor unit **210,** wherein each of the three sensors is a combined radar sensor and IMU sensor.

In both examples (a) and (b), the three sensors **230, 250** located in the tractor unit **210,** are mounted and directed as follows; one mounted at the front of the tractor unit **210** with its radar pointing in a forward direction of the vehicle, and the other two mounted at respective sides - and towards the rear - of the tractor unit **210** with their radars pointing in a direction between a backward and a lateral direction of the vehicle.

By letting the radar sensors covering forward, lateral, and rearward areas (e.g., as in examples (a) and (b)), the system may be enabled to estimate motion from various angles. Thereby, it might be possible to ensure that the vehicle can respond effectively to dynamic environments on all sides. Alternatively or additionally, such radar sensor setups might enable prediction of the behavior of other road users, improving overall situational awareness and safety, etc.

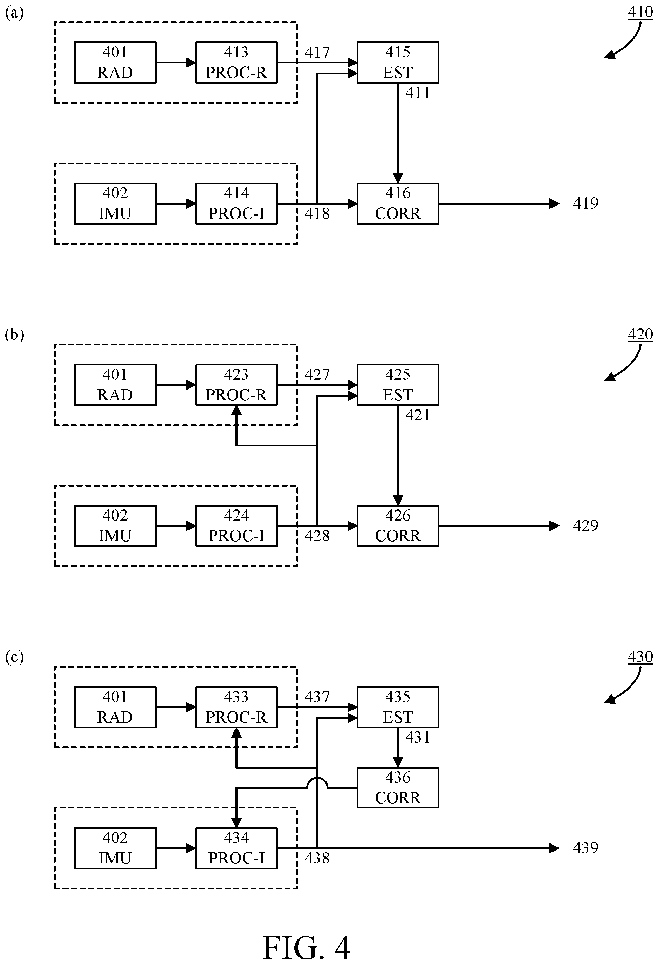

**FIG. 4** schematically illustrates three motion estimation principles - (a), (b) and (c) - where IMU sensor data and radar sensor data are combined. All three principles use a first preliminary motion estimation based on radar sensor data and a second preliminary motion estimation based on IMU sensor data. To this end, radar sensor(s) (RAD) are schematically represented **401,** and IMU sensor(s) (IMU) are schematically represented **402.**

In example (a), a combination of IMU sensor data and radar sensor data is illustrated via a schematic functional arrangement **410** (which can be referred to as a loosely coupled open-loop integration architecture). The radar sensor data is processed by radar processing (PROC-R) **413** to provide the first preliminary motion estimation **417.** The IMU sensor data is processed by IMU processing (PROC-I; e.g., employing inertial mechanization equations) **414** to provide the second preliminary motion estimation **418.** The first and second preliminary motion estimations are input to an estimator (EST) **415,** which is configured to compare them and determine a corresponding discrepancy **411.** As illustrated by **416,** the discrepancy **411** is used to apply a correction (e.g., a scaling and/or a bias) to the second preliminary motion estimation **418,** for provision of the motion estimation **419.** For example, the dynamically varying weighting may be applied in **415** and/or **416** (e.g., defining a coefficient for the discrepancy **411** in **415** and/or for the correction in **416**).

In example (b), a combination of IMU sensor data and radar sensor data is illustrated via a schematic functional arrangement **420** (which can be referred to as a tightly coupled open-loop integration architecture). The radar sensor data is processed by radar processing (PROC-R) **423** to provide the first preliminary motion estimation **427.** The IMU sensor data is processed by IMU processing (PROC-I; e.g., employing inertial mechanization equations) **424** to provide the second preliminary motion estimation **428.** The first and second preliminary motion estimations are input to an estimator (EST) **425,** which is configured to compare them and determine a corresponding discrepancy **421.** As illustrated by **426,** the discrepancy **421** is used to apply a correction (e.g., a scaling and/or a bias) to the second preliminary motion estimation **428,** for provision of the motion estimation **429.** The second preliminary motion estimation **428** is also provided as an input to the radar processing **423,** which may be adapted based thereon. For example, the dynamically varying weighting may be applied in **423** and/or **425** and/or **426** (e.g., defining a coefficient for the adaptation in **423** and/or for the discrepancy **421** in **425** and/or for the correction in **426**).

In example (c), a combination of IMU sensor data and radar sensor data is illustrated via a schematic functional arrangement **430** (which can be referred to as a tightly coupled closed-loop integration architecture). The radar sensor data is processed by radar processing (PROC-R) **433** to provide the first preliminary motion estimation **437.** The IMU sensor data is processed by IMU processing (PROC-I; e.g., employing inertial mechanization equations) **434** to provide the second preliminary motion estimation **438.** The first and second preliminary motion estimations are input to an estimator (EST) **435,** which is configured to compare them and determine a corresponding discrepancy **431.** As illustrated by **436,** the discrepancy **431** is used to apply a correction to the IMU processing **434** (e.g., to compensate for accelerometers/gyroscope biases). The second preliminary motion estimation **438** is also provided as an input to the radar processing **433,** which may be adapted based thereon. The second preliminary motion estimation **438** is provided as the motion estimation **439.** For example, the dynamically varying weighting may be applied in **433** and/or **435** and/or **436** and/or **434** (e.g., defining a coefficient for the adaptation in **423** and/or for the discrepancy **431** in **425** and/or for the correction in **426** and/or **434**).

The radar processing **413, 423, 433** may, or may not, be similar (e.g., identical).

The IMU processing **414, 424, 434** may, or may not, be similar (e.g., identical).

The estimator (EST) **415, 425, 435** may, for example, be implemented using an error-state extended Kalman filter or a Bayesian estimation technique.

The discrepancy **411, 421, 431** can be estimated using various techniques. For example, the uncertainty of each information source (radar and IMU) may be essentially described by a respective probability distribution. In a Bayesian formulation, the dynamically varying weighting may be implemented by altering the distributions during operation to reflect the varying levels of accuracy and reliability. In an extended Kalman filter approach, where the distributions are assumed to be Gaussian, the dynamically varying weighting may be implemented by changing the statistics of the Gaussian distributions to adapt the Kalman gain dynamically over time.

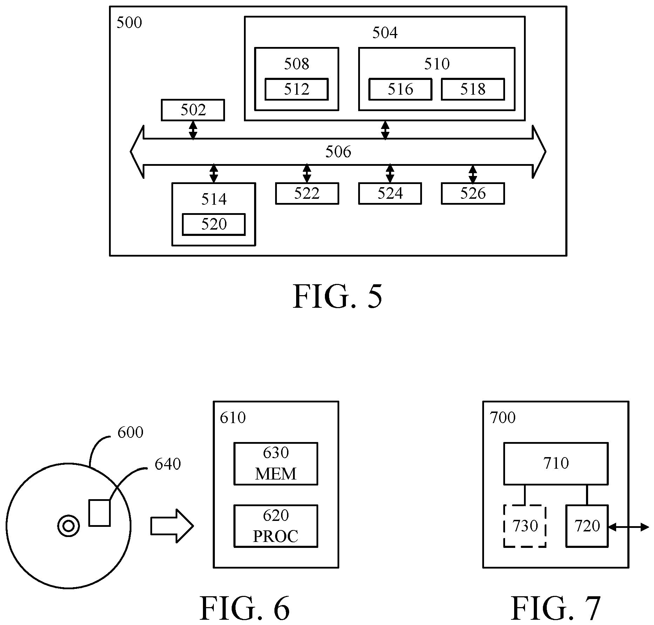

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product exemplified as a non-transitory computer-readable medium in the form of a compact disc (CD) ROM **600.** The computer-readable medium has stored thereon program code **640** comprising instructions. The program code is loadable into processing circuitry (PROC; e.g., a data processing unit) **620,** which may, for example, be comprised in a device **610,** such as a VCU. When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in the vehicle **200** (e.g., in the form of a VCU **290**). Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit **700** to perform a set of operations, or steps, such as any of the methods discussed herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for an articulated vehicle **200** comprising a tractor **210** and/or one or more towed vehicle units **220,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** A computer system for motion estimation of a vehicle, the computer system comprising processing circuitry configured to: perform a first preliminary motion estimation based on radar sensor data; perform a second preliminary motion estimation based on inertial measurement unit, IMU, sensor data; and determine a motion estimation for the vehicle as a weighted average of the first and second preliminary motion estimations, wherein the weighted average is determined by application of a dynamically varying weighting.

**Example 2:** The computer system of **Example 1,** wherein the weighting varies dynamically based on one or more variable vehicle parameters and/or based on one or more variable environmental parameters of the vehicle.

**Example 3:** The computer system of any of **Examples 1-2,** wherein the weighting varies dynamically based on a speed of the vehicle.

**Example 4:** The computer system of **Example 3,** wherein a weight corresponding to a first speed value entails higher influence for the first preliminary motion estimation than a weight corresponding to a second speed value which is lower than the first speed value.

**Example 5:** The computer system of any of **Examples 1-4,** wherein the weighting varies dynamically based on an ambient temperature of the vehicle.

**Example 6:** The computer system of **Example 5,** wherein a weight corresponding to a first temperature value entails higher influence for the first preliminary motion estimation than a weight corresponding to a second temperature value which is lower than the first temperature value.

**Example 7:** The computer system of any of **Examples 1-6,** wherein the weighting varies dynamically based on an ambient humidity of the vehicle.

**Example 8:** The computer system of **Example 7,** wherein a weight corresponding to a first humidity value entails higher influence for the first preliminary motion estimation than a weight corresponding to a second humidity value which is higher than the first humidity value.

**Example 9:** The computer system of any of **Examples 1-8,** wherein the weighting varies dynamically based on an activity level of windscreen wipers of the vehicle.

**Example 10:** The computer system of **Example 9,** wherein a weight corresponding to a first activity level entails higher influence for the first preliminary motion estimation than a weight corresponding to a second activity level which is higher than the first activity level.

**Example 11:** A vehicle comprising the computer system of any of **Examples 1-10.**

**Example 12:** The vehicle of **Example 11,** further comprising: one or more radar sensor(s) configured to provide the radar sensor data to the computer system; and one or more IMU sensor(s) configured to provide the IMU sensor data to the computer system.

**Example 13:** A computer-implemented method for motion estimation of a vehicle, the method comprising: performing (by processing circuitry of a computer system) a first preliminary motion estimation based on radar sensor data; performing (by the processing circuitry) a second preliminary motion estimation based on inertial measurement unit, IMU, sensor data; and determining (by the processing circuitry) a motion estimation for the vehicle as a weighted average of the first and second preliminary motion estimations, wherein the weighted average is determined by application of a dynamically varying weighting.

**Example 14:** The method of **Example 13,** wherein the weighting varies dynamically based on one or more variable vehicle parameters and/or based on one or more variable environmental parameters of the vehicle.

**Example 15:** The method of any of **Examples 13-14,** wherein the weighting varies dynamically based on a speed of the vehicle.

**Example 16:** The method of any of **Examples 13-15,** wherein the weighting varies dynamically based on an ambient temperature of the vehicle.

**Example 17:** The method of any of **Examples 13-16,** wherein the weighting varies dynamically based on an ambient humidity of the vehicle.

**Example 18:** The method of any of **Examples 13-17,** wherein the weighting varies dynamically based on an activity level of windscreen wipers of the vehicle.

**Example 19:** A computer program product comprising program code for performing, when executed by processing circuitry, the method of any of **Examples 13-18.**

**Example 20:** A non-transitory computer-readable storage medium comprising instructions, which when executed by processing circuitry, cause the processing circuitry to perform the method of any of **Examples 13-18.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (290, 500) for motion estimation of a vehicle, the computer system comprising processing circuitry configured to:
perform a first preliminary motion estimation (417, 427, 437) based on radar sensor data;
perform a second preliminary motion estimation (418, 428, 438) based on inertial measurement unit, IMU, sensor data; and
determine a motion estimation (419, 429, 439) for the vehicle as a weighted average of the first and second preliminary motion estimations, wherein the weighted average is determined by application of a dynamically varying weighting.

2. The computer system of claim 1, wherein the weighting varies dynamically based on one or more variable vehicle parameters and/or based on one or more variable environmental parameters of the vehicle.

3. The computer system of any of claims 1-2, wherein the weighting varies dynamically based on a speed (131) of the vehicle.

4. The computer system of claim 3, wherein a weight corresponding to a first speed value entails higher influence for the first preliminary motion estimation than a weight corresponding to a second speed value which is lower than the first speed value.

5. The computer system of any of claims 1-4, wherein the weighting varies dynamically based on an ambient temperature (132) of the vehicle.

6. The computer system of claim 5, wherein a weight corresponding to a first temperature value entails higher influence for the first preliminary motion estimation than a weight corresponding to a second temperature value which is lower than the first temperature value.

7. The computer system of any of claims 1-6, wherein the weighting varies dynamically based on an ambient humidity (133) of the vehicle.

8. The computer system of claim 7, wherein a weight corresponding to a first humidity value entails higher influence for the first preliminary motion estimation than a weight corresponding to a second humidity value which is higher than the first humidity value.

9. The computer system of any of claims 1-8, wherein the weighting varies dynamically based on an activity level of windscreen wipers (134) of the vehicle.

10. The computer system of claim 9, wherein a weight corresponding to a first activity level entails higher influence for the first preliminary motion estimation than a weight corresponding to a second activity level which is higher than the first activity level.

11. A vehicle (200) comprising the computer system of any of claims 1-10.

12. The vehicle of claim 11, further comprising:
one or more radar sensor(s) (230, 250) configured to provide the radar sensor data to the computer system; and
one or more IMU sensor(s) (240, 250) configured to provide the IMU sensor data to the computer system.

13. A computer-implemented method (100) for motion estimation of a vehicle, the method comprising:
performing (110), by processing circuitry of a computer system, a first preliminary motion estimation based on radar sensor data;
performing (120), by the processing circuitry, a second preliminary motion estimation based on inertial measurement unit, IMU, sensor data; and
determining (130), by the processing circuitry, a motion estimation for the vehicle as a weighted average of the first and second preliminary motion estimations, wherein the weighted average is determined by application of a dynamically varying weighting.

14. A computer program product (600) comprising program code for performing, when executed by processing circuitry, the method of claim 13.

15. A non-transitory computer-readable storage medium (600) comprising instructions, which when executed by processing circuitry, cause the processing circuitry to perform the method of claim 13.

## Amended claims

### Amended claims in accordance with Rule 137(2) EPC.

1. A computer system (290, 500) for motion estimation of a vehicle, the computer system comprising processing circuitry configured to:
perform a first preliminary motion estimation (417, 427, 437) based on radar sensor data provided by radar processing (413, 423, 433);
perform a second preliminary motion estimation (418, 428, 438) based on inertial measurement unit, IMU, sensor data provided by IMU processing (414, 424, 434);
determine a discrepancy (411, 421, 431) between the first and second preliminary motion estimations; and
use the discrepancy to:
apply a correction (436) to IMU processing and provide and provide the second preliminary motion estimation as motion estimation (439) for the vehicle; or
apply a correction (416, 426) to the second preliminary motion estimation and provide the corrected second preliminary motion estimation as motion estimation (419, 429) for the vehicle,
wherein the motion estimation (419, 429, 439) for the vehicle is determined as a weighted average of the first and second preliminary motion estimations, wherein the weighted average is determined by application of a dynamically varying weighting, wherein the dynamically varying weighting defines coefficient(s) for the discrepancy determination and/or the correction, wherein the dynamically varying weighting is determined by adaptive filtering subject to current conditions, and wherein the adaptive filtering is determined by machine learning.

2. The computer system of claim 1, wherein the weighting varies dynamically based on one or more variable vehicle parameters and/or based on one or more variable environmental parameters of the vehicle.

3. The computer system of any of claims 1-2, wherein the weighting varies dynamically based on a speed (131) of the vehicle.

4. The computer system of claim 3, wherein a weight corresponding to a first speed value entails higher influence for the first preliminary motion estimation than a weight corresponding to a second speed value which is lower than the first speed value.

5. The computer system of any of claims 1-4, wherein the weighting varies dynamically based on an ambient temperature (132) of the vehicle.

6. The computer system of claim 5, wherein a weight corresponding to a first temperature value entails higher influence for the first preliminary motion estimation than a weight corresponding to a second temperature value which is lower than the first temperature value.

7. The computer system of any of claims 1-6, wherein the weighting varies dynamically based on an ambient humidity (133) of the vehicle.

8. The computer system of claim 7, wherein a weight corresponding to a first humidity value entails higher influence for the first preliminary motion estimation than a weight corresponding to a second humidity value which is higher than the first humidity value.

9. The computer system of any of claims 1-8, wherein the weighting varies dynamically based on an activity level of windscreen wipers (134) of the vehicle.

10. The computer system of claim 9, wherein a weight corresponding to a first activity level entails higher influence for the first preliminary motion estimation than a weight corresponding to a second activity level which is higher than the first activity level.

11. A vehicle (200) comprising the computer system of any of claims 1-10.

12. The vehicle of claim 11, further comprising:
one or more radar sensor(s) (230, 250) configured to provide the radar sensor data to the computer system; and
one or more IMU sensor(s) (240, 250) configured to provide the IMU sensor data to the computer system.

13. A computer-implemented method (100) for motion estimation of a vehicle, the method comprising:
performing (110), by processing circuitry of a computer system, a first preliminary motion estimation based on radar sensor data provided by radar processing (413, 423, 433);
performing (120), by the processing circuitry, a second preliminary motion estimation based on inertial measurement unit, IMU, sensor data provided by IMU processing (414, 424, 434);
determining, by the processing circuitry, a discrepancy (411, 421, 431) between the first and second preliminary motion estimations; and
using the discrepancy to:
apply a correction (436) to IMU processing and provide and provide (130) the second preliminary motion estimation as motion estimation (439) for the vehicle; or
apply a correction (416, 426) to the second preliminary motion estimation and provide (130) the corrected second preliminary motion estimation as motion estimation (419, 429) for the vehicle,
wherein the motion estimation for the vehicle is determined as a weighted average of the first and second preliminary motion estimations, wherein the weighted average is determined by application of a dynamically varying weighting, wherein the dynamically varying weighting defines coefficient(s) for the discrepancy determination and/or the correction, wherein the dynamically varying weighting is determined by adaptive filtering subject to current conditions, and wherein the adaptive filtering is determined by machine learning.

14. A computer program product (600) comprising program code for performing, when executed by processing circuitry, the method of claim 13, wherein the processing circuitry is configured to receive the radar sensor data from one or more radar sensors of the vehicle and to receive the IMU sensor data from one or more IMU sensors of the vehicle.

15. A non-transitory computer-readable storage medium (600) comprising instructions, which when executed by processing circuitry, cause the processing circuitry to perform the method of claim 13, wherein the processing circuitry is configured to receive the radar sensor data from one or more radar sensors of the vehicle and to receive the IMU sensor data from one or more IMU sensors of the vehicle.
